(19) 

Europäisches
Patentamt
European
Patent Office
Office européen
des brevets

(11) **EP 3 805 339 A1**

(12) **EUROPEAN PATENT APPLICATION**
published in accordance with Art. 153(4) EPC

(43) Date of publication:
**14.04.2021 Bulletin 2021/15**

(21) Application number: **18921356.4**

(22) Date of filing: **04.06.2018**

(51) Int Cl.:
***C09K 17/02*** *(2006.01)*

(86) International application number:
**PCT/JP2018/021340**

(87) International publication number:
**WO 2019/234790 (12.12.2019 Gazette 2019/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Suntory Holdings Limited Osaka 530-8203 (JP)**

(72) Inventor: **MATSUI, Hiroo Soraku-gun, Kyoto 619-0284 (JP)**

(74) Representative: **Vossius & Partner Patentanwälte Rechtsanwälte mbB Siebertstrasse 3 81675 München (DE)**

(54) **SOIL MODIFICATION METHOD, SOIL MODIFICATION MATERIAL, AND USE THEREOF**

(57) The present invention aims to provide a soil modifier capable of modifying soil to promote plant growth when applied to the soil, a soil modification method using the soil modifier, and use of the soil modifier. The present invention also aims to provide a soil modifier capable of reducing climate change impacts such as increased temperature and decreased rainfall on plant growth; a soil modification method using the soil modifier; and use of the soil modifier. The present invention relates to a soil modification method including burying or placing a soil modifier containing calcined diatomaceous earth having a particle size of 20 to 2000 $\mu$m around a plant.

EP 3 805 339 A1

**Description**

TECHNICAL FIELD

The present invention relates to a soil modification method, a soil modifier, and use thereof.

BACKGROUND ART

In recent years, impact of temperature increase and climate change associated with global warming on the growth of plants including crops has been significant. Especially in regions where the temperature increases and the rainfall decreases every year, the growth of crops produced has been impaired, and the quality and/or yield of the harvest has been reduced.

Traditionally grown crops for which regional climate, soil, and the like provide favorable conditions (such crops are also referred to as regional specialties) are also not exempted from the above problem. Due to global temperature increase and climate change, a reduction in the quality and/or yield of the harvest is anticipated also for regional specialties of various regions (Non-Patent Literature 1). Regional specialties are the basis of regional agriculture, and a reduction in the quality and/or yield of regional specialties is a problem that causes financial damage to farmers and thus to the whole region.

Further, the secondary industry workers who process the regional specialties are also affected by the problem because a reduction in the quality and/or supply of raw materials is directly related to the quality and/or production volume of processed products. Thus, the impaired crop growth caused by climate change and the like is a problem that affects a wide range of aspects. When the quality of raw materials is degraded, the secondary industry workers make attempts to produce processed products with a certain level of quality by changing the process method or the like so as to maintain the quality of the processed products. In addition, in order to provide for a reduction in supply of raw materials, measures are taken by supplying more than a necessary and sufficient amount of raw materials, for example. Yet, such changes in the process method lead to an increase in process cost and process time, and storage of excess inventory leads to deterioration of cash flow.

Thus, there has been a demand for stable growth of plants including crops.

Meanwhile, irrigation management has been known as one of important factors in plant growth. In regions with low rainfall, water retention is imparted to soil, for example, by a method of mixing the soil with a water retaining material that serves as a soil improving material. Such a method is widely employed. In addition, soil for cultivating plants requires air circulation (hereinafter also referred to as aeration) in order to allow roots to keep breathing and to prevent or reduce root rot. Specific examples of the water retaining material include leaf mold, lightweight shale, peat moss, perlite, vermiculite, and urethane foam. Yet, these materials are not always able to simultaneously satisfy both water retention effect and aeration effect. Unfortunately, the effect of the water retaining materials derived from plants such as leaf mold is unlikely to last long.

In another well-known technique, soil is mixed with a superabsorbent polymer that absorbs water in an amount that is several hundred times the own weight so as to improve the water retention of the soil. This technique is expected to play an important role particularly in environmental protection, such as desert greening and desertification prevention.

There are many specific examples in which such a water-absorbent resin is used. For example, Patent Literature 1 describes a soil improving agent obtained by kneading and mixing expanded polystyrene particles, fine powder of a superabsorbent polymer, and crushed stone powder or sand with a water-emulsion adhesive or a binder to produce a particle aggregate, and drying the particle aggregate. Yet, such a superabsorbent polymer contains a synthetic resin and thus may adversely affect the environment. Especially regarding crops, the superabsorbent polymer creates concerns over food safety. Patent Literature 2 suggests a soil improving agent (superabsorbent polymer) that has excellent water retention during use and that dissolves after use to avoid accumulation in soil. Yet, since the soil improving agent does not accumulate in the soil, its effect is not likely to last long.

Patent Literature 3 suggests maintaining a constant water content in soil and reducing the salt concentration in the soil by dispersing or burying diatomaceous earth and the like in the soil in order to control the growth of trees.

Yet, the diatomaceous earth and the like described in Patent Literature 3 also fail to have sufficient water retention effect.

As described above, studies have been made on methods of imparting water retention to the soil, but no soil improving material has been proposed that simultaneously satisfies both water retention and aeration. Further, no soil improving material has been proposed that improves the sustained release of water retained in the soil in order to allow plants to efficiently use water in the soil.

CITATION LIST

Patent Literature

Patent Literature 1: JP H6-88074 A
Patent Literature 2: JP H11-124575 A
Patent Literature 3: JP 2014-110781 A

Non-Patent Literature

Non-Patent Literature 1: The impact of climate change on the yield and quality of Saaz hops in the Czech Republic, Agricultural and Forest Meteorology, vol. 149, (2009), pp. 913-919

SUMMARY OF INVENTION

- Technical Problem

The present invention aims to provide a soil modifier capable of modifying soil to promote plant growth when applied to the soil, a soil modification method using the soil modifier, and use of the soil modifier.
The present invention also aims to provide a soil modifier capable of reducing climate change impacts such as decreased rainfall on plant growth; a soil modification method using the soil modifier; and use of the soil modifier.

- Solution to Problem

As a result of extensive studies to achieve the above aims, the present inventors found that application of calcined diatomaceous earth having a particle size in a specific range to soil promotes plant growth and allows crops to grow with a stable yield and stable quality even in a year affected by climate change such as decreased rainfall.
Herein, "A to B" means "A or more and B or less".
Specifically, the present invention relates to the following soil modification method, soil modifier, and use thereof.

(1) A soil modification method including burying or placing a soil modifier containing calcined diatomaceous earth having a particle size of 20 to 2000 $\mu$m around a plant.
(2) The soil modification method according to (1) above, wherein the plant is a hop.
(3) The soil modification method according to (1) or (2) above, wherein the soil modifier is buried or placed around a plant before a rainy season prior to a flowering phase of the plant.
(4) The soil modification method according to any one of (1) to (3) above, wherein the amount of the soil modifier applied in an agricultural field is 0.67 to 6.7 L/m$^2$.
(5) Use of a soil modifier for promotion of plant growth, wherein a soil modifier containing calcined diatomaceous earth having a particle size of 20 to 2000 $\mu$m is buried or placed around a plant.
(6) The use of a soil modifier according to (5) above, wherein the plant is a hop.
(7) The use of a soil modifier according to (5) or (6) above, wherein the soil modifier is buried or placed around a plant before a rainy season prior to a flowering phase of the plant.
(8) Use of the soil modifier according to any one of (5) to (7) above, wherein the amount of the soil modifier applied in an agricultural field is 0.67 to 6.7 L/m$^2$.
(9) Use of the soil modifier according to any one of (5) to (8) above, wherein the soil modifier is used in a region where the total rainfall in a month including a flowering phase is 150 mm/month or less.
(10) A soil modifier containing calcined diatomaceous earth having a particle size of 20 to 2000 $\mu$m.
(11) The soil modifier according to (10) above, wherein the calcined diatomaceous earth has a water retention of 40% or more.

- Advantageous Effects of Invention

Application of the soil modifier of the present invention can improve soil properties such as water retention, aeration, and sustained release of water, which can promote plant growth and contribute to stable growth. In addition, the soil improving effect of the soil modifier of the present invention is continuously maintained for several years.

BRIEF DESCRIPTION OF DRAWINGS

Fig. 1 shows schematic views that explain burying a soil modifier around the base of a plant.
Fig. 2 shows schematic views that explain placing a soil modifier on a soil surface above the base of a plant.
Fig. 3 shows a graph showing the total rainfall during a growing phase of test plants and reference plants from years 2015 to 2017.
Fig. 4 shows a plot showing changes in water content of soil to which a material 1 according to Example 8 is applied.
Fig. 5 shows a graph showing the water absorption capacity of the material 1 according to Example 9 and materials 2 to 4 according to Comparative Examples 6 to 8, respectively.
Fig. 6 shows pictures of before and after water absorption of the material 1 according to Example 9 and the materials 2 to 4 according to Comparative Examples 6 to 8, respectively.

DESCRIPTION OF EMBODIMENTS

The soil modifier of the present invention contains calcined diatomaceous earth having a particle size of 20 to 2000 $\mu$m.

The calcined diatomaceous earth is a calcined product of diatomaceous earth. The calcined diatomaceous earth used in the present invention is one in which at least a part of organic substances present on the surface and in pores of diatomaceous earth has been removed by combustion. The calcination method of diatomaceous earth to obtain calcined diatomaceous earth may be a commonly used method. For example, preferably, diatomaceous earth is maintained at 600°C for 30 minutes or longer. Calcination under such conditions removes water and organic substances attached to the surface and in the pores of the diatomaceous earth. Thus, a calcined product (calcined diatomaceous earth) having improved chemical stability is obtained. When such a calcined product is applied to the soil, the effect of the present invention can be more sufficiently demonstrated. Herein, the calcined diatomaceous earth having a particle size of 20 to 2000 $\mu$m may also be referred to as granular calcined diatomaceous earth.

The soil modifier of the present invention only contains the calcined diatomaceous earth having a particle size of 20 to 2000 $\mu$m. Here, the calcined diatomaceous earth may be a calcined diatomaceous earth mixture of different particle sizes, as long as the particle size is in the above range.

The calcined diatomaceous earth used in the present invention has a particle size of 20 to 2000 $\mu$m. Herein, the calcined diatomaceous earth having the particle size is obtained by selection using a sieve by which an intended particle size is obtained. For example, in order to obtain calcined diatomaceous earth having a particle size of 20 to 2000 $\mu$m, calcined diatomaceous earth is subjected to sieving through a sieve having a mesh diameter of 2000 $\mu$m, and then the calcined diatomaceous earth that passed through the sieve are subjected to sieving through a sieve having a mesh diameter of 20 $\mu$m, whereby calcined diatomaceous earth having an intended particle size are selected.

When the particle size of the calcined diatomaceous earth is less than 20 $\mu$m, the calcined diatomaceous earth has a small particle size and a low percentage of gas phase volume due to the absence of voids, resulting in an insufficient effect of improving the soil aeration. When the particle size of the calcined diatomaceous earth is more than 2000 $\mu$m, the voids are so large that water is discharged before the calcined diatomaceous earth absorbs water to saturation, resulting in reduced water retention.

The lower limit of the particle size of the calcined diatomaceous earth is 20 $\mu$m. In view of the water retention effect and the soil aeration improving effect, the particle size is preferably 100 $\mu$m or more, more preferably 300 $\mu$m or more, still more preferably 400 $\mu$m or more. The upper limit of the particle size of the calcined diatomaceous earth is 2000 $\mu$m. The particle size is preferably 1800 $\mu$m or less, more preferably 1700 $\mu$m or less, still more preferably 1500 $\mu$m or less. For example, the particle size of the calcined diatomaceous earth is preferably 100 to 2000 $\mu$m, more preferably 300 to 1800 $\mu$m, still more preferably 300 to 1700 $\mu$m, yet still more preferably 400 to 1700 $\mu$m, particularly preferably 400 to 1500 $\mu$m.

Diatomaceous earth is the sediment (a sedimentary rock) of fossilized shells of diatoms, which are a species of algae. The diatom shells are made of silicon dioxide ($SiO_2$). The diatoms, which are unicellular phytoplankton, specifically absorb silica dissolved in water and accumulate the silica to form porous cell walls. Mass death of diatoms in an ocean, lake, or pond results in deposition of diatom carcasses on the bottom of the water body. Organic substances in the carcasses are gradually decomposed, and ultimately, only shells mainly containing silicon dioxide remain. A rock made of diatom fossils as described above is diatomaceous earth.

Diatom shells include numerous small pores. Thus, the weight per volume of diatomaceous earth is very small. Thus, the diatomaceous earth can retain a large amount of water and the like. Perlite and zeolite are also porous materials and have properties similar to those of the diatomaceous earth. Yet, perlite and zeolite are different from the diatomaceous earth in that they are derived from volcanic rocks. In the case of zeolite, the pore size is different from that of the diatomaceous earth, and pores having a nanometer size are the main pores.

Various applications of the diatomaceous earth depending on the quality have been found. Those with a low amount of impurities are further purified and processed for use as filter aids, filler, carriers, and the like. Those containing foreign substances such as clay are used as building materials, insulating bricks, soil improving materials, and the like because it is difficult to separate the foreign substances.

While the diatomaceous earth has been long and widely used, the diatomaceous earth as a soil improving material has been used only as a water retaining material. No properties has been found that can simultaneously satisfy both water retention and sustained release of water in order to allow plants to efficiently use water in soil, and that is effective in improving the soil aeration.

Preferably, the calcined diatomaceous earth used in the present invention has a water retention of 40% or more. The calcined diatomaceous earth having a water retention of 40% or more can sufficiently increase the water retention of soil to which a soil modifier containing the calcined diatomaceous earth is added. Such calcined diatomaceous earth can also promote plant growth.

Herein, the water retention is expressed as a percentage of the volume of water that can be retained by the calcined diatomaceous earth (i.e., the amount of water absorption or the amount of water retention) to the volume of the calcined diatomaceous earth (100 $\times$ amount of water absorption (ml)/volume of calcined diatomaceous earth (ml)). A specific measurement method is as follows.

(Method of measuring water retention)

Calcined diatomaceous earth (50 ml) is placed in a sealable plastic bag, and water is added in increments of 1 to 5 ml until saturation is reached. After the calcined diatomaceous earth is mixed with water, the plastic bag is visually checked. When no water is attached to the inside of the plastic bag, it is determined that the all the water added has been absorbed by the calcined diatomaceous earth. Saturation is considered to be reached when water starts attaching to the inside of the plastic bag. The amount (ml) of water added until saturation is regarded as the amount of water absorption (amount of water retention). Taking the volume (50 ml) of the calcined diatomaceous earth before water addition as the volume of the calcined diatomaceous earth, the obtained amount of water absorption and the volume of the calcined diatomaceous earth are substituted into the formula to calculate the water retention.

The water retention of the calcined diatomaceous earth is more preferably 50% or more, still more preferably 55% or more. The water retention of the calcined diatomaceous earth is preferably 80% or less, more preferably 75% or less. Calcined diatomaceous earth whose upper limit of the water retention is more than 80% has too high a water absorption capacity and thus may have poor sustained release of water. For example, the water retention of the calcined diatomaceous earth is preferably 40 to 80%, more preferably 50 to 80%, still more preferably 55 to 75%, most preferably 55 to 60%.

Here, the soil water includes, for example, gravity water that flows out from the soil, capillary water retained in capillary soil voids, and hygroscopic water adsorbed to the surface of soil particles. The soil water used by plant roots is capillary water stored in soil voids.

Organic substances on the surface and in the pores of the calcined diatomaceous earth used in the present invention have been removed by calcination, so that the calcined diatomaceous earth has a large specific surface area, a high porosity, a large amount of capillary water retained by absorption, and a high volume of water absorbed, as compared to non-calcined diatomaceous earth. In contrast, organic substances are present on a surface and in pores of the non-calcined diatomaceous earth, so that the amount of water absorption is small, and a portion of the water absorbed is presumably adsorbed onto the organic substances and serves as hygroscopic water. In addition, since organic substances are present on the surface and in the pores of the non-calcined diatomaceous earth, the non-calcined diatomaceous earth has a small specific surface area and a small pore volume. Thus, the amount of water retained by absorption is small. Therefore, presumably, adding the calcined diatomaceous earth to soil can increase the amount of capillary water in the soil to increase the amount of water that can be used by plant roots and to promote stable growth of the plants.

Further, since the capillary water in the soil is transferable water, a larger amount of capillary water results in a larger specific heat of the soil. When the temperature is high, a large amount of heat is lost by evaporation of the capillary water in the soil. When the temperature is low, the heat is released by freezing of the capillary water. Thus, sudden changes in soil temperature can be prevented. Therefore, presumably, it is possible to reduce climate change impacts on the soil environment where plants are rooted and to reduce high temperature stress and low temperature stress against the plants.

The calcined diatomaceous earth used in the present invention has a particle size in a specific range and thus can provide adequate voids to soil when applied to the soil. This is because when the calcined diatomaceous earth (calcined diatomaceous earth particles) having a particle size in a specific range is added to the soil, voids are formed between a calcined diatomaceous earth particle and its adjacent calcined diatomaceous earth particle or soil particle.

As shown in later-described examples, the calcined diatomaceous earth particles used in the present invention have voids between particles even when the water absorption reached saturation. Thus, presumably, addition of the calcined diatomaceous earth particles improve the porosity (liquid phase + gas phase) of the soil having voids between particles, which can not only increase the amount of capillary water retained in the pores but also improve the soil aeration. The soil having a higher porosity tends to be softer, which helps growth of plant roots.

The present invention also provides a soil modification method including burying or placing the soil modifier around a plant. The present invention also provides use of the soil modifier for promotion of plant growth, wherein the soil modifier is buried or placed around a plant. Burying or placing the calcined diatomaceous earth having a particle size of 20 to 2000 $\mu$m in soil can increase the amount of water retention per unit volume and the aeration of the soil containing the calcined diatomaceous earth, promote plant growth, and provide soil where the climate change impacts on plant growth is reduced. Thus, the soil modification method of the present invention is also a soil modification method for promoting plant growth by burying or placing the soil modifier around a plant. The calcined diatomaceous earth having a particle size of 20 to 2000 $\mu$m which is used as the soil modifier and preferred embodiments thereof are as described above.

The method of burying or placing a soil modifier is not limited as long as the effect of the present invention is achieved. In one embodiment, the soil modification method can use a burying method that includes digging up soil in a substantially cylindrical shape with a predetermined radius (within a range covering full-grown roots of the plant) around a plant to a predetermined depth (within a range covering full-grown roots of the plant); placing the soil modifier into the space made by digging, and covering the soil modifier with the soil.

When plant seeds or base is already buried in soil, the soil modification method can use a placing method that includes scattering the soil modifier in a predetermined region (preferably within a range covering full-grown roots of the plant) on the surface of the soil covering the seeds or base.

Also when the placing method is used, the soil modifier placed is usually mixed with the soil around the plant by subsequent rain, watering, topdressing, and the like.

In either the burying method or the placing method, a mixture containing the soil modifier and the soil at a predetermined ratio may be used.

The plant for the soil modification method and the use of the soil modifier is not limited. Yet, preferably, the plant is a perennial plant, a rhizocarpous plant, a tree, or the like because the granular calcined diatomaceous earth demonstrates a soil modifying effect for several years once buried or placed. Thus, improved cost-effectiveness can be achieved.

Preferably, the plant for the soil modification method and the use of the soil modifier is a hop (Humulus lupulus). The hop is a perennial plant of the genus *Humulus* L. of the family Cannabaceae.

Other preferred plants for the soil modification method and the use of the soil modifier are a grape (*Vitis* spp.), a tea plant (*Camellia sinensis* (L.) Kuntze), and a coffee plant. The grape is a vine deciduous shrub of the family Vitaceae. The tea plant is an evergreen tree of the genus *Camellia* of the family Theaceae. The coffee plant is a tree of the genus *Coffea* of the family Rubiaceae.

The hop is used as a raw material of beer. According to the investigation by the present inventors, the hop yield tends to decrease due to rainfall shortage during the flowering phase, and aroma components tend to decrease due to high temperatures during the flowering phase.

The soil modification method and the use of the soil modifier of the present invention can be suitably used for plants whose growth is impaired due to climate change impacts such as increased temperature and decreased rainfall.

In the soil modification method and the use of the soil modifier of the present invention, the time to burry or place the soil modifier is not limited because its effect lasts for several years as described above. Yet, preferably, the soil modifier is buried or placed before a rainy season prior to the flowering phase of the plant. It is because water shortage during the flowering phase of the plant growth may cause a decrease in the number of flowering and affect the yield. Examples of plants whose yield is affected by water shortage during the flowering phase include hops, coffee plants, cucumbers, eggplants, bell peppers, and chili peppers.

In the soil modification method and the use of the soil modifier, the amount of the soil modifier applied per unit area in an agricultural field is preferably 0.67 to 6.7 L/m$^2$. When the amount applied is in the above range, it is possible to sufficiently increase the amount of water retention and the aeration (porosity) of the soil, and the effect of the present invention can be more sufficiently demonstrated.

The amount of the soil modifier applied per unit area in the agricultural field is preferably 0.67 L/m$^2$ or more, more preferably 1.34 L/m$^2$ or more, still more preferably 1.66 L/m$^2$ or more. The amount of the soil modifier applied per unit area in the agricultural field is preferably 6.7 L/m$^2$ or less, more preferably 5.03 L/m$^2$ or less, still more preferably 3.35 L/m$^2$ or less. The amount of the soil modifier applied per unit area in the agricultural field is more preferably 1.34 to 5.03 L/m$^2$, still more preferably 1.66 to 3.35 L/m$^2$.

In the soil modification method and the use of the soil modifier, the amount of the soil modifier applied per unit area around the base of a plant is preferably 2 to 30 L/m$^2$. When the amount applied is in this range, it is possible to sufficiently increase the amount of water retention and the porosity (aeration) of the soil, and the effect of the present invention can be more sufficiently demonstrated.

The amount of the soil modifier applied per unit area around the base of a plant is preferably 2 L/m$^2$ or more, more preferably 5 L/m$^2$ or more, still more preferably 10 L/m$^2$ or more. The amount of the soil modifier applied per unit area around the base of a plant is preferably 30 L/m$^2$ or less, more preferably 25 L/m$^2$ or less, still more preferably 20 L/m$^2$ or less. The amount of the soil modifier applied per unit area around the base of a plant is more preferably 5 to 25 L/m$^2$, still more preferably 10 to 20 L/m$^2$.

The area in which the soil modifier is used around the base of a plant is preferably determined so as to include at least 50% of full-grown roots of the plant. More preferably, the area is determined so as to include at least 60% of full-grown roots of the plant.

For example, when the plant is a hop, the amount of the soil modifier applied per unit area in a circular area having a diameter of 20 to 100 cm with the base of the hop at the center is preferably 2 to 30 L/m$^2$, more preferably 2.5 to 25 L/m$^2$.

In the soil modification method and the use of the soil modifier, the percentage of the soil modifier applied per unit volume in a predetermined area having a predetermined depth with the base of plant at the center is preferably 10 to 100 vol%. When the amount applied is in this range, it is possible to sufficiently increase the amount of water retention and the porosity (aeration) of the soil, and the effect of the present invention can be more sufficiently demonstrated. The percentage of the soil modifier applied per unit volume in a predetermined area having a predetermined depth with the base of plant at the center is preferably 10 vol% or more, more preferably 20 vol% or more, still more preferably 40 vol% or more. The percentage of the soil modifier applied per unit volume in a predetermined area having a predetermined depth with the base of plant at the center is preferably 100 vol% or less, more preferably 90 vol% or less, still more preferably 80 vol% or less.

For example, when the plant is a hop, the amount of the soil modifier applied per unit volume in a cylindrical volume having a diameter of 20 to 100 cm and a depth of 5 to 20 cm with the base of the hop at the center is preferably 10 to 100 vol%, more preferably 10 to 90 vol%.

Use of the calcined diatomaceous earth having a particle size of 20 to 2000 μm in soil for plant growth increases the amount of water retention of the soil, allowing water storage and moderate water supply to the plant. This allows efficient supply of water and nutrition to the plant. This can also improve the drought resistance at high temperatures. Further, this can improve the soil aeration. In addition, this can prevent or reduce sharp temperature changes in the soil and can reduce climate change impacts. Thus, the calcined diatomaceous earth having the particle size described above is suitable for use for promotion of plant growth.

As described above, the use of the calcined diatomaceous earth having a particle size of 20 to 2000 μm increases the amount of capillary water in the soil. Thus, the calcined diatomaceous earth is preferably used in soil for plant growth in regions with fluctuating total rainfall caused by climate change.

In a region with increasing total rainfall, presumably, the soil modifier that absorbs water can absorb excess water in soil having poor drainage and prevent or reduce damage such as soil-borne diseases and root rot.

In a region with decreasing total rainfall, the soil modifier absorbs water during rainfall or irrigation and moderately releases the water later, thus allowing water supply to the plant even after rainfall or irrigation.

Water shortage during the flowering phase of the plant greatly affects the yield. The suitable amount of water varies depending on the plant. Yet, for example, the soil modifier is preferably used in a region where the total rainfall in a month including the flowering phase is 150 mm/month or less.

In the case of a region where irrigation cannot be applied, the soil modifier is preferably used in a region where the total rainfall in a month including the flowering phase is 20 mm/month or more and 150 mm/month or less.

When the soil modifier is applied for hop cultivation, the soil modifier is preferably applied in the region described above.

The soil modifier, soil modification method, and use of the soil modifier of the present invention may be used in any soil. Yet, the soil preferably has a water content of less than 50%.

The soil modifier, soil modification method, and use of the soil modifier of the present invention may be used in any soil. Yet, the percentage of solid phase of the soil is preferably 55% or more, more preferably 60% or more, still more preferably 65% or more. When the percentage of solid phase of the soil is higher, the soil has a lower porosity (gas phase + liquid phase) and has a lower water content, thus failing to achieve efficient water supply to the plant. Further, due to a lower specific heat, the plant is more susceptible to high temperature stress and low temperature stress.

EXAMPLES

The present invention is described in detail below with reference to examples, but the present invention is not limited thereto.

(Example 1)

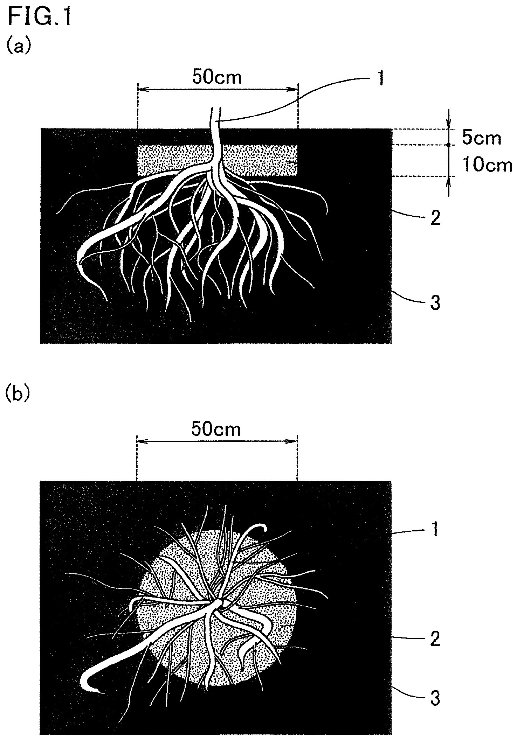

As shown in Fig. 1, a material 1 shown in Table 1 below was applied to soil. Specifically, a hole having a diameter of 50 cm and a depth of 10 cm was dug with the base of a plant (1) (hop) at the center, and 20 L of the material 1 (2) was placed in the hole, and the material was covered with soil (3). Fig. 1(a) is a schematic cross-sectional view of the soil to which the material 1 was applied. Fig. 1(b) is a schematic bottom view of the soil to which the material 1 was applied. In this manner, 24 test plants 1 according to Example 1 were prepared.

(Comparative Examples 1 and 2)

Here, 24 test plants 2 according to Comparative Example 1 and 24 test plants 3 according to Comparative Example 3 were prepared as in Example 1, except that materials 2 and 3 shown in Table 1 were used, respectively, instead of the material 1.
The materials 1 to 3 used above are as follows.

Material 1: calcined diatomaceous earth (product name: RC417 available from Showa Chemical Industry Co., Ltd.; particle size: 400 to 1700 $\mu$m)
Material 2: calcined diatomaceous earth (product name: #300 available from Showa Chemical Industry Co., Ltd.; average particle size: 13 $\mu$m)
Material 3: perlite (product name: M-1 available from Showa Chemical Industry Co., Ltd.; average particle size: 6000 $\mu$m or less)

The materials 1 to 3 are all porous. The average particle sizes of the materials 2 and 3 are values measured by a laser particle size distribution meter. The material 1 was obtained by selecting the calcined diatomaceous earth having the particle size described above using a sieve.

(Reference Example 1)

A hole having a diameter of 50 cm and a depth of 10 cm was dug with the base of a plant (hop) at the center by the same method as in Example 1, except that the material 1 was not placed in the hole. The hole was backfilled with the soil. For reference, 24 reference plants 1 were prepared under the same conditions as those for the test plants 1 to 3, except that no material was placed in the soil.
The test plants 1 to 3 and the reference plant 1 were prepared in the same test agricultural field. In order to prevent test results from being affected by differences in plant growth between each place or between each ridge in the agricultural field, the test plants 1 to 3 and the reference plants 1 (24 plants each) were planted randomly in multiple ridges. The test agricultural field had an area of 10000 m$^2$ and included 3333 plants (hops).
For the test plants 1 to 3 and the reference plant 1, hops were cultivated for three years (2015 to 2017) by a usual method except that the materials were used. Cones were harvested in the first autumn (August to September), second autumn (August to September), and third autumn (August to September) from the start of the test. Table 1 below shows the rate of change in yield per unit (kg/plant) of the test plant with respect to the reference plant. The yield per unit of each of the test plants and the reference plant was determined by measuring the yield (k/plant) of each plant and calculating an average based on the number of plants prepared (24 plants for each of the test plant 1 to 3 and the reference plant 1). As described above, each material was placed only once during preparation of the test plants and the reference plant. No material was placed after the start of the test.
The hop is a perennial plant. Once seedlings are planted, cultivation of hops lasts 20 to 50 years. The test agricultural field is in Zatec in Czech Republic. Harvest time is August to September. Hops grow in a cold climate area. Thus, harvest time is about the same in a cold climate region in the northern hemisphere.
Regarding a yield increasing effect on each test plant, when the increase rate of yield per unit (kg/plant) of the test plant with respect to yield per unit (kg/plant) of the reference plant was less than 10%, the yield increasing effect was determined as "absent". When the increase rate of yield per unit (kg/plant) of the test plant was 10% or more and less than 25%, the yield increasing effect was determined as "low". When the yield increase rate of yield per unit (kg/Plant) of the test plant was 25% or more, the yield increasing effect was determined as "high". Regarding the rate of change in yield shown in Table 1, ** indicates a significant difference with respect to the yield of per unit of the reference plant 1 (**: $P < 0.01$, vs. reference plant 1). Student's t-test was used to test the significance of difference.

[Table 1]

| | Material | Particle size | Test plant No. | Rate of change in yield (year 2015) | Rate of change in yield (year 2016) | Rate of change in yield (year 2017) | Yield increasing effect and its level |
|---|---|---|---|---|---|---|---|
| Example 1 | Material 1 | 400-1700 μm | Test plant 1 | 144% ** | 130% ** | 132% ** | Present (high) |
| Comparative Example 1 | Material 2 | Average 13 μm | Test plant 2 | 106% | 121%** | 118% | Present (low) |
| Comparative Example 2 | Material 3 | 6000 μm or less | Test plant 3 | 74% | 107% | 96% | Absent |
| Reference Example 1 | - | - | Reference plant 1 | 100% | 100% | 100% | - |

The values of the rate of change in yield in Table 1 are calculated based on the yield per unit of Reference Example 1.

According to the above results, in Example 1 in which the material 1 was calcined diatomaceous earth having a particle size in the range of 20 to 2000 μm (i.e., the soil modifier of the present invention), the rate of yield increased by 30% or more in each of the three years after the material was applied, as compared to Reference Example 1. Thus, a high yield increasing effect was observed. This confirms promotion of plant growth in the soil to which the material 1 was applied.

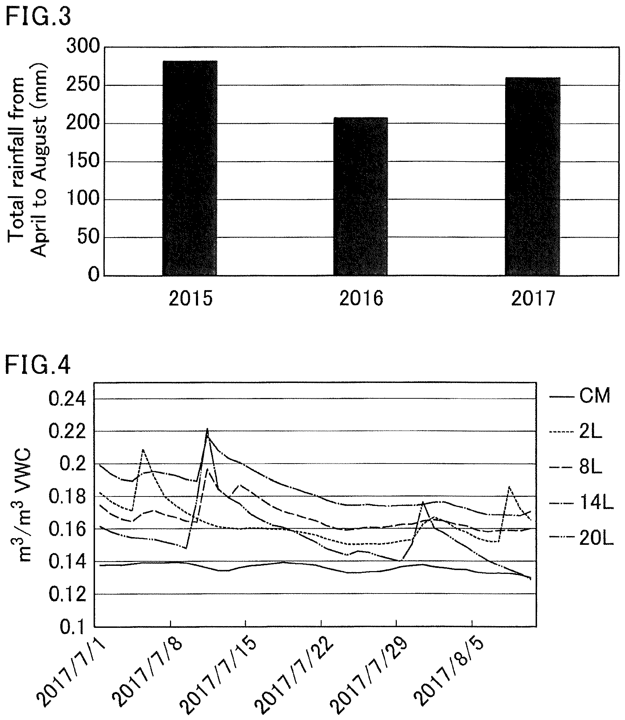

Further, according to Fig. 3 showing the amount of rainfall from April to August (the growing phase of the plant (hops)) in each of the three years, the amount of rainfall was small in 2016. Yet, according to the results in Table 1, the year 2016 also showed a stable yield increasing effect on the plants according to Example 1. Thus, climate change impacts such as decreased rainfall were reduced.

Meanwhile, in Comparative Example 1 in which the material 2 was calcined diatomaceous earth having an average particle size of 13 μm, the rate of change in yield in 2015 did not exceed 110%, and a stable yield increasing effect was not observed. Even in 2016 and 2017 when the rate of change in yield was 110% or more, the yield increase rate was lower than 25%. Thus, the level of the yield increasing effect was low even when the yield increasing effect was demonstrated.

In Comparative Example 2 in which the material was porous perlite different from diatomaceous earth, the rate of change in yield did not reach 110% in none of the three years from 2015 to 2017. Thus, no yield increasing effect was observed. Since the rate of change in yield in 2015 and 2017 was lower than 100%, clearly, the application of the perlite to the soil produces no yield increasing effect.

The cones harvested in each of Example 1 and Reference Example 1 were separately dried and steam distilled to obtain essential oils. These essential oils were quantified by gas chromatography analysis. As a result, there was no significant difference in the amount of linalool that is an indicator component of hop aroma between Example 1 and Reference Example 1 in any of the years. There were also no significant differences in the amount of essential oil (ml/100 g) and the amount of α acid in any of the years. These results show that the quality of hops was not affected by the application of the calcined diatomaceous earth.

(Example 2)

A hole having a diameter of 50 cm and a depth of 10 cm was dug with the base of a plant (hop) at the center as in Example 1. The material 1 (2 L) shown in Table 2 below was mixed with soil (18 L) in the agricultural field, placed in the hole (about 20 L), and covered with soil to plant seedlings. In this manner, 16 test plants 4 according to Example 2 were prepared. The test agricultural field had an area of 10000 m$^2$ and included 3333 hop plants. Thus, the area per plant is 3 m$^2$. Thus, the amount of the material 1 applied per area in the agricultural field was 0.67 L/m$^2$.

(Examples 3, 4, and 5)

Test plants 5, 6, and 7 (16 plants each) according to Examples 3, 4, and 5, respectively, were prepared as in Example 2, except that the amount of the material 1 applied was changed to the amount shown in Table 2 below and the amount of the soil to be mixed was changed to obtain a total amount of 20 L. The amount of the material 1 applied per area in the agricultural field was 2.67 L/m$^2$ in Example 3, 4.67 L/m$^2$ in Example 4, and 6.67 L/m$^2$ in Example 5.

(Comparative Examples 3, 4, and 5)

Test plants 8 to 10 (8 plants each) according to Comparative Examples 3 to 5, respectively, were prepared as in Example 2, except that the material 4 was used instead of the material 1, the amount of the material applied was changed as shown in Table 2 below, and the amount of soil to be mixed was changed to obtain a total amount of 20 L.
The material 4 was non-calcined diatomaceous earth (product name: KF-N available from Showa Chemical Industry Co., Ltd.; particle size: 500 to 2000 $\mu$m). The non-calcined diatomaceous earth of the material 4 is porous.

(Reference Example 2)

A hole having a diameter of 50 cm and a depth of 10 cm was dug with the base of a plant (hop) at the center as in Example 2, except that the material was not placed in the hole. The hole was backfilled with the soil, and 16 reference plants 2 according to Reference Example 2 were prepared.

(Example 6)

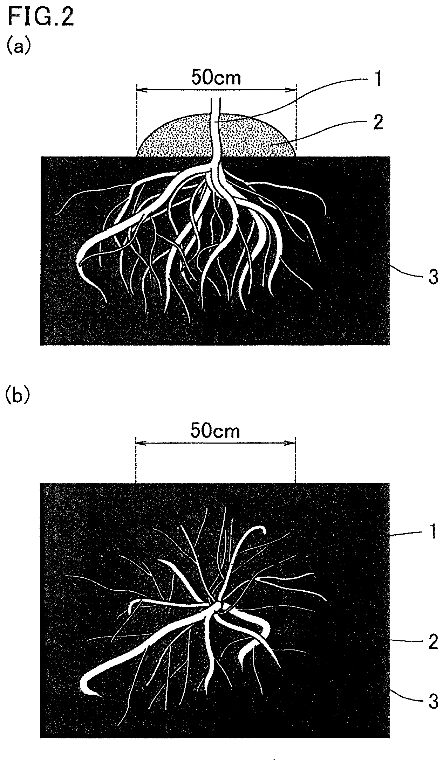

As shown in Fig. 2, the material 1 shown in Table 3 below was applied to the surface of soil (3). Specifically, the material 1 (2) (2 L) was uniformly placed in a substantially circular range having a diameter of 50 cm with the base of the plant (1) (hop) at the center. Fig. 2(a) is a schematic cross-sectional view of the soil whose surface was subjected to application of the material 1 (2). Fig. 2(b) is a schematic bottom view of the soil to which the material 1 (2) was applied. In this manner, 16 test plants 11 according to Example 6 were prepared.

(Example 7)

Sixteen test plants 12 according to Example 7 were prepared as in Example 6, except that the amount of the material 1 applied was changed to the amount shown in Table 3 below.

(Reference Example 3)

Sixteen reference plants 3 according to Reference Example 3 were prepared as in Example 6, except that no material was placed.
The test plants 4 to 12 and the reference plants 2 and 3 were planted in the same agricultural field. In order to prevent test results from being affected by differences in plant growth between each place or between each ridge in the agricultural field, the test plants 4 to 12 and the reference plants 2 and 3 were planted randomly in multiple ridges. The test agricultural field had an area of 10000 m$^2$ and included 3333 plants (hops).
The test plants 4 to 12 and the reference plants 2 and 3 were cultivated, and cones were harvested in the first autumn (August to September) from the start of the test. Tables 2 and 3 below each show the rate of change in yield per unit (kg/plant) of the test plant with respect to the reference plant. The yield per unit of each of the test plants and the reference plant was determined by averaging the yield of each plant group (16 plants per group).
As described above, each material was placed only once during preparation of the test plants and the reference plant. No material was placed after the start of the test.
Regarding the yield increasing effect on each test plant, when the yield per unit (kg/plant) of the test plant increased by 10% or more with respect to yield per unit (kg/plant) of the reference plant, the yield increasing effect was determined as "present".
The yield per unit of each of Examples 2 to 5 and Comparative Examples 3 to 5 was determined based on the yield per unit of Reference Example 2. The yield per unit of each of Examples 6 and 7 was determined based on the yield per unit of Reference Example 3. Regarding the rate of change in yield shown in Table 2, * and ** each indicate a significant difference with respect to the yield of per unit of the reference plant 2 (*: $P < 0.05$, **: $P < 0.01$, vs. reference plant 2). Student's t-test was used to test the significance of difference.

[Table 2]

| | Material | particle size | Amount applied (L) | Material mixing rate (%) | Application method | Test plant No. | Rate of change in yield | Yield increasing effect |
|---|---|---|---|---|---|---|---|---|
| Example 2 | Material 1 | 400-1700 μm | 2 | 10 | Mixing | Test plant 4 | 140% ** | Present |
| Example 3 | | | 8 | 40 | | Test plant 5 | 136% * | Present |
| Example 4 | | | 14 | 70 | | Test plant 6 | 138% ** | Present |
| Example 5 | | | 20 | 100 | | Test plant 7 | 123% | Present |
| Comparative Example 3 | Material 4 | 500-2000 μm | 8 | 40 | | Test plant 8 | 102% | Absent |
| Com parative Example 4 | | | 14 | 70 | | Test plant 9 | 101% | Absent |
| Comparative Example 5 | | | 20 | 100 | | Test plant 10 | 68% | Absent |
| Reference Example 2 | - | - | - | - | | Reference plant 2 | 100% | - |

The values of the rate of change in yield in Table 2 were calculated based on the yield per unit of Reference Example 2.

[Table 3]

|  | Material | Particle size | Amount applied (L) | Material mixing ratio (%) | Application method | Test plant No. | Rate of change in yield | Yield increasing effect |
|---|---|---|---|---|---|---|---|---|
| Example 6 | Material 1 | 400-1700 μm | 2 | 10 | Surface layer | Test plant 11 | 120% | Present |
| Example 7 | | | 8 | 40 | | Test plant 12 | 113% | Present |
| Reference Example 3 | - | - | - | - | | Reference plant 3 | 100% | - |

The values of the rate of change in yield in Table 3 were calculated based on the yield per unit of Reference Example 3.

According to the results in Tables 2 and 3, in Examples 2 to 7 in which the material 1 was calcined diatomaceous earth having a particle size in the range of of 20 to 2000 μm, the rate of yield increased regardless of the application method and amount of the material, and the yield increasing effect was observed. Regarding the application method, while the yield increasing effect was higher in Examples 2 to 5 each in which the material was mixed with the soil surrounding the plants, the yield increasing effect was also observed in Examples 6 and 7 each in which the material was simply placed on the surface of the soil where the plants were planted.

In Comparative Examples 3 to 5 each in which the material 4 was non-calcined diatomaceous earth having a particle size in the range of 20 to 2000 μm, the yield did not increase regardless of the amount of the material applied, and no yield increasing effect was observed in any of these comparative examples.

(Example 8)

In each of Examples 2 to 5, the water content of the soil where the material 1 mixed with the soil was applied to the plants (hops) was measured, and changes in the water content were monitored for about a month and a half. Average soil water content per day during this period was calculated and plotted in graph as shown in Fig. 4. In Fig. 4, CM is control (without the material 1), and 2 L, 8 L, 14 L, and 20 L are amounts of the material 1 applied (in 20 L). The method of measuring the soil water content is as described below.

(Method of measuring soil water content)

A sensor (5TE available from Decagon Co. Ltd.) to measure the soil water content was placed at the base of the plant (hop). A logger to record the data was a 5-channel Em50 data logger available from Decagon Co. Ltd. Two plants were randomly selected in each test section, and the soil water content was measured periodically.

Fig. 4 confirms that the soil where the material 1 mixed with the soil was applied to the plants (hops) in Example 8 had a higher soil water content than the soil where the material 1 was not applied, even when the amount of the material 1 applied was 2 L/plant. When the amount of the material 1 applied was 2 to 14 L/plant (0.67 to 4.67 L/m$^2$), the soil water content gradually decreased, and presumably, the water was continuously supplied to the plants. These results correspond to the results in Table 2. The rate of change in yield in each of Examples 2 to 4 was higher than the rate of change in yield in Example 5.

According to Fig. 4, the water content of the soil where the material 1 mixed with the soil was applied showed changes in behavior according to the environment. After an increase in the soil water content, the water content gradually decreased, and even after the decrease, the soil maintained a high water content, as compared to the soil where the material was not applied. Thus, clearly, the soil where the material 1 mixed with the soil was applied not only had a high water content but also a capability to gradually release water, and the plants were able to efficiently utilize the water in the soil.

This confirms that the application of the material 1 modified the soil so that the soil was less susceptible to climate change impacts and was more likely to retain water.

(Example 9 and Comparative Examples 6 to 8)

(Water absorption test)

The material 1 (Example 9), the material 2 (Comparative Example 6), the material 3 (Comparative Example 7), and the material 4 (Comparative Example 8) were tested for water absorption by the following procedure.

Each of the above materials (50 ml each) was placed in a sealable plastic bag (Unipack® available from Seisannipponsha Ltd.). Water was added in increments of 1 to 5 ml until saturation was reached, and mixed with the material. Saturation was considered to be reached (by visual observation) when water started attaching to the inside of the plastic bag. The amount of water added until saturation was recorded. The amount of water added (ml) per material (L) was calculated as the amount of water absorption (ml/L). The amount of water absorption can be converted into the water retention by the following formula.

```
Water retention (%) = 100 × amount of water absorption
(ml/L)/1000
```

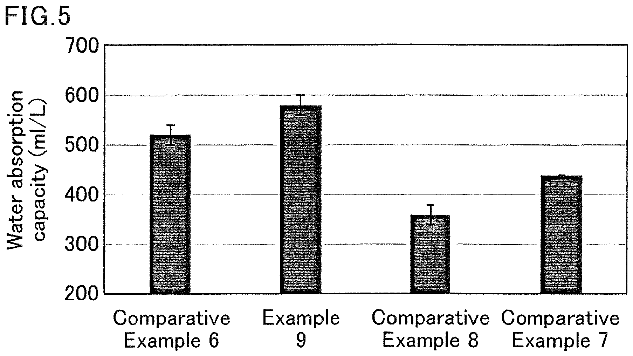

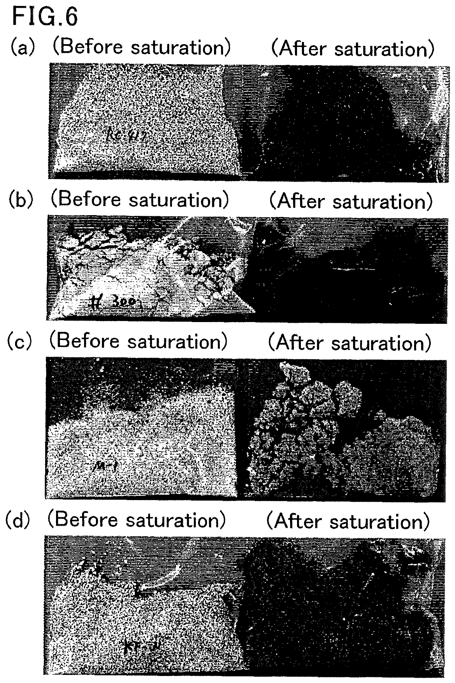

Fig. 5 shows the results of the water absorption tests. Fig. 5 shows an average (N = 3). The material 1 had a water retention of 58%. Fig. 6 shows pictures of the materials before and after the water absorption test ((a): material 1 (calcined diatomaceous earth having a particle size of 400 to 1700 $\mu$m), (b): the material 2 (calcined diatomaceous earth having an average particle size of 13 $\mu$m), (c): material 3 (perlite), and (d): material 4 (non-calcined diatomaceous earth)). In Figs. 6(a) to 6(d), the pictures on the left (before saturation) show the materials before the water absorption test (before addition of water), and the pictures on the right (after saturation) show the materials at saturation with water.

According to Fig. 5, the material 1 of Example 9 (coarse calcined diatomaceous earth having a particle size of 400 to 1700 $\mu$m) showed a higher water absorption capacity that was 200 ml/L or more than that of the material 4 of Comparative Example 8 (coarse non-calcined diatomaceous earth having a particle size of 500 to 2000 $\mu$m). Presumably, the amount of water absorption increased due to an increase in the specific surface area and an increase in the pore volume attributable to removal of the organic substances on the surface and in the pores of the diatomaceous earth by a calcination process. According to Fig. 6(a), the presence of voids between the particles was visually observed in the material 1 even after the water absorption reached saturation.

According to Fig. 5, the material 2 of Comparative Example 6 (fine calcined diatomaceous earth having an average particle size of 13 $\mu$m) had a water absorption capacity as high as that of the material 1 of Example 9. Yet, according to Fig. 6(b), the whole material 2 of Comparative Example 6 was solidified without voids after the water absorption reached saturation. The material 2 did not produce a yield increasing effect in the agricultural field test in Table 1. Presumably, the reason is that since many particles of the material 2 had a small particle size, the voids disappeared as the water was absorbed, and the plant growth was suppressed due to lack of oxygen supply.

According to Fig. 5, the material 3 of Comparative Example 7 (perlite having a particle size of 600 $\mu$m or less), and the material 4 of Comparative Example 8 (coarse non-calcined diatomaceous earth having a particle size of 500 to 2000 $\mu$m) each had a lower water absorption capacity than that of the material 1 of Example 9. According to Figs. 6(c) and 6(d), the presence of voids between the particles was visually observed in these materials even after the water absorption reached saturation.

REFERENCE SIGNS LIST

1   plant
2   material
3   soil

**Claims**

**1.** A soil modification method comprising:
burying or placing a soil modifier containing calcined diatomaceous earth having a particle size of 20 to 2000 $\mu$m around a plant.

**2.** The soil modification method according to claim 1,

wherein the plant is a hop.

3. The soil modification method according to claim 1 or 2,
   wherein the soil modifier is buried or placed around a plant before a rainy season prior to a flowering phase of the plant.

4. The soil modification method according to any one of claims 1 to 3,
   wherein the amount of the soil modifier applied in an agricultural field is 0.67 to 6.7 L/m$^2$.

5. Use of a soil modifier for promotion of plant growth,
   wherein a soil modifier containing calcined diatomaceous earth having a particle size of 20 to 2000 $\mu$m is buried or placed around a plant.

6. The use of a soil modifier according to claim 5,
   wherein the plant is a hop.

7. The use of a soil modifier according to claim 5 or 6,
   wherein the soil modifier is buried or placed around a plant before a rainy season prior to a flowering phase of the plant.

8. Use of the soil modifier according to any one of claims 5 to 7,
   wherein the amount of the soil modifier applied in an agricultural field is 0.67 to 6.7 L/m$^2$.

9. Use of the soil modifier according to any one of claims 5 to 8,
   wherein the soil modifier is used in a region where the total rainfall in a month including a flowering phase is 150 mm/month or less.

10. A soil modifier comprising:
    calcined diatomaceous earth having a particle size or 20 to 2000 $\mu$m.

11. The soil modifier according to claim 10,
    wherein the calcined diatomaceous earth has a water retention of 40% or more.

FIG.1

(a)

(b)

FIG.2

(a)

(b)

## FIG.3

## FIG.4

FIG.5

# FIG.6

(a)  (Before saturation)       (After saturation)

(b)  (Before saturation)       (After saturation)

(c)  (Before saturation)       (After saturation)

(d)  (Before saturation)       (After saturation)

## INTERNATIONAL SEARCH REPORT

| International application No. |
| --- |
| PCT/JP2018/021340 |

A. CLASSIFICATION OF SUBJECT MATTER
Int. Cl. C09K17/02(2006.01)i

According to International Patent Classification (IPC) or to both national classification and IPC

B. FIELDS SEARCHED

Minimum documentation searched (classification system followed by classification symbols)
Int. Cl. C09K17/00-17/52, C05B1/00-21/00, C05C1/00-13/00, C05D1/00-11/00, C05F1/00-17/02, C05G1/00-5/00, A01G1/00-1/02, A01G1/06-1/12, A01G5/00-7/06, A01G16/00-17/02, A01G17/18

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)
CAplus (STN), JSTPlus/JST7580/JSTChina (JDreamIII)

C. DOCUMENTS CONSIDERED TO BE RELEVANT

| Category* | Citation of document, with indication, where appropriate, of the relevant passages | Relevant to claim No. |
| --- | --- | --- |
| X | JP 04-189912 A (ISOLITE INSULATING PRODUCTS CO., | 1, 3-5, 7-11 |
| A | LTD.) 08 July 1992, claims, examples, page 2, lower left column (Family: none) | 2, 6 |
| X | JP 06-062656 A (HEALTH AGURO KK) 08 March 1994, | 1, 3-5, 7-11 |
| A | claims, examples, paragraph [0017] (Family: none) | 2, 6 |
| X | JP 3056097 U (ISOLITE INSULATING PRODUCTS CO., | 1, 3-5, 7-11 |
| A | LTD.) 02 February 1999, claims, all drawings, paragraphs [0001], [0011], [0017], [0018] (Family: none) | 2, 6 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13.07.2018 | 24.07.2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/021340 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2003-041107 A (KAGINUSHI KOGYO KK) 13 February 2003, claims, examples, paragraphs [0013], [0026], [0028] (Family: none) | 10-11 |
| A | | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H688074 A
- JP H11124575 A
- JP 2014110781 A

**Non-patent literature cited in the description**

- The impact of climate change on the yield and quality of Saaz hops in the Czech Republic. *Agricultural and Forest Meteorology,* 2009, vol. 149, 913-919